Europäisches Patentamt

European Patent Office

Office européen des brevets

(19)

(11) Veröffentlichungsnummer: **0 371 155**

**A1**

## (12) EUROPÄISCHE PATENTANMELDUNG

(21) Anmeldenummer: **88119805.5**

(22) Anmeldetag: **28.11.88**

(51) Int. Cl.⁵: **F02B 33/44, F02B 29/00**

(43) Veröffentlichungstag der Anmeldung:
**06.06.90 Patentblatt 90/23**

(84) Benannte Vertragsstaaten:
**DE ES FR GB IT SE**

(71) Anmelder: **TP "KORABOIMPEX"**
**Boulevard D.Blagoev 128**
**BG-9000 Varna(BG)**

(72) Erfinder: **Kostov, Tentcho Koytchev, Dipl.-Ing.**
**Cherno More-Strasse 29**
**BG-9000 Varna Quartal Vinitza(BG)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **Vorrichtung für die Luftzuführung zu einer Brennkraftmaschine.**

(57) Die Vorrichtung für die Luftzuführung zu einer Brennkraftmaschine weist einen abgasgetriebenen Turbolader auf, der über einen Luftverteiler Ladeluft bereitstellt. Der Luftverteiler besteht aus einem zylindrischen Gehäuse (6), in dem ein Rotor (7) über ein Getriebe (18) von der Kurbelwelle (19) der Brennkraftmaschine angetrieben wird. In dem Gehäuse sind in einem Winkelabstand von 90 Grad aufeinanderfolgend eine Beschickungsöffnung (9) für Luft- oder ein Kraftstoff-Luft-Gemisch, eine Ladeöffnung (11), an die das Einlaßrohr (1) des Zylinders (3) der Brennkraftmaschine angeschlossen ist, und eine Verbindungsöffnung (10) angeordnet, die über einen Förderstutzen (17) mit dem Gebläse (5) des Turboladers verbunden ist. Ausgehend vom oberen Totpunkt des in dem Zylinder (3) angeordneten Kolbens (12) ist über einen Profilkanal (8) in dem Rotor (7) zunächst die Beschickungsöffnung (9) mit der Ladeöffnung (11) verbunden, ehe die Verbindungsöffnung (10) mit der Ladeöffnung (11) zum Nachladen des Zylinders (3) in Verbindung kommt.

EP 0 371 155 A1

## VORRICHTUNG FÜR DIE LUFTZUFÜHRUNG ZU EINER BRENNKRAFTMASCHINE

Die Erfindung betrifft eine Vorrichtung für die Luftzuführung zu einer Brennkraftmaschine mit wenigstens einem Zylinder, in dem ein mit einer Kurbelwelle gekoppelter Kolben hin- und herbewegbar angeordnet ist und in den kopfseitig eine Einlaßleitung mit einem Einlaßventil und eine Auslaßleitung mit einem Auslaßventil münden, und mit einem Luft fördernden Gebläse, dessen Förderstutzen über eine Verbindungsöffnung mit einem einen Luftverteiler bildenden zylindrischen Gehäuse verbunden ist, in welchem ein einen Profilkanal aufweisender und über ein Getriebe mit der Kurbelwelle der Brennkraftmaschine verbundener Rotor drehbar gelagert ist.

Bei einer solchen, aus der DE-32 46 855 C bekannten Vorrichtung sind lufteinlaßseitig am Zylinder der Brennkraftmaschine eine Hauptleitung und eine zusatzleitung vorgesehen, von denen jeder ein eigenes Ventil zugeordnet ist. Die Ventile werden zusammen mit dem Ventil der Auslaßleitung über einen Steuermechanismus betätigt. In der Zusatzleitung sind vor dem zugehörigen Ventil zunächst ein Gebläse und dann ein Verteiler angeordnet, die über mechanische Getriebe von der Kurbelwelle der Brennkraftmaschine angetrieben werden. Mit der bekannten Vorrichtung ist es möglich, in den Zylinder über die Hauptleitung Luft oder ein Kraftstoff-Luft-Gemisch aufgrund der Ansaugung bei sich abwärts bewegenden Kolben einzubringen. Ferner ist es möglich, zu einem festgelegten Zeitpunkt dem Zylinder über die Zusatzleitung vorverdichtete Luft zuzuführen, um die Leistung der Brennkraftmaschine zu erhöhen.

Der Aufbau der bekannten Vorrichtung ist sehr aufwendig, außerdem sind die mechanischen Verluste hoch, da einlaßseitig zwei Leitung mit jeweils einem zugeordneten Ventil vorgesehen werden, die spezielle Steuermechanismen erfordern.

Die der Erfindung zugrunde liegende Aufgabe besteht nun darin, die Vorrichtung der gattungsgemäßen Art so auszubilden, daß sie unter Steigerung der Leistung und bei Verringerung der mechanischen Verluste einfach gebaut und ohne Schwierigkeiten an eine entsprechende Brennkraftmaschine angebracht und auf diese abgestimmt werden kann.

Diese Aufgabe wird ausgehend von der Vorrichtung der gattungsgemäßen Art dadurch gelöst, daß im Gehäuse eine der Verbindungsöffnung diametral gegenüberliegende Beschickungsöffnung für Luft oder ein Kraftstoff-Luft-Gemisch und symmetrisch dazwischen eine Ladeöffnung ausgebildet sind, an die das Einlaßrohr angeschlossen ist, wobei der Rotorantrieb so eingestellt ist, daß der Profilkanal beim Ladetakt das Einlaßrohr zunächst mit der Beschickungsöffnung und dann mit der Verbindungsöffnung verbindet.

Die erfindungsgemäße Vorrichtung, bei welcher die Verbindungsöffnung und die Beschickungsöffnung in einem Winkelabstand von 180 Grad am Gehäuse und dazwischen die Ladeöffnung mit einem Winkelabstand von jeweils 90 Grad angeordnet ist, benötigt nur eine geringe Anzahl von Bauteilen, also kein drittes Ventil. Die vorrichtung kann leicht an jede bekannte Brenn kraftmaschine angepaßt und daran angebracht werden. Durch das Nachladen des Zylinders mit der erfindungsgemäßen Vorrichtung ergibt sich eine erhöhte Leistung der Brennkraftmaschine bei reduzierten mechanischen Verlusten.

Bei einer vorteilhaften Ausgestaltung erstreckt sich der Profilkanal am Rotor über einen Umfangswinkel von weniger als 160 Grad. Dadurch wird ausgehend von der oberen Punktstellung des Kolbens eine Füllung des Zylinderraums zunächst über die Beschickungsöffnung und dann über die Verbindungsöffnung gewährleistet und verhindert, daß die Verbindungsöffnung über den Profilkanal in Verbindung mit der Beschickungsöffnung gelangen kann.

Eine besonders zweckmäßig Bauweise der Vorrichtung besteht darin, daß das luftfördernde Gebläse zusammen mit einer vom Abgas der Brennkraftmaschine angetriebenen Turbine einen Abgasturbolader bildet.

Anhand einer Zeichnung, in der eine Ausführungsform der Vorrichtung schematisch dargestellt ist, wird die Erfindung näher erläutert.

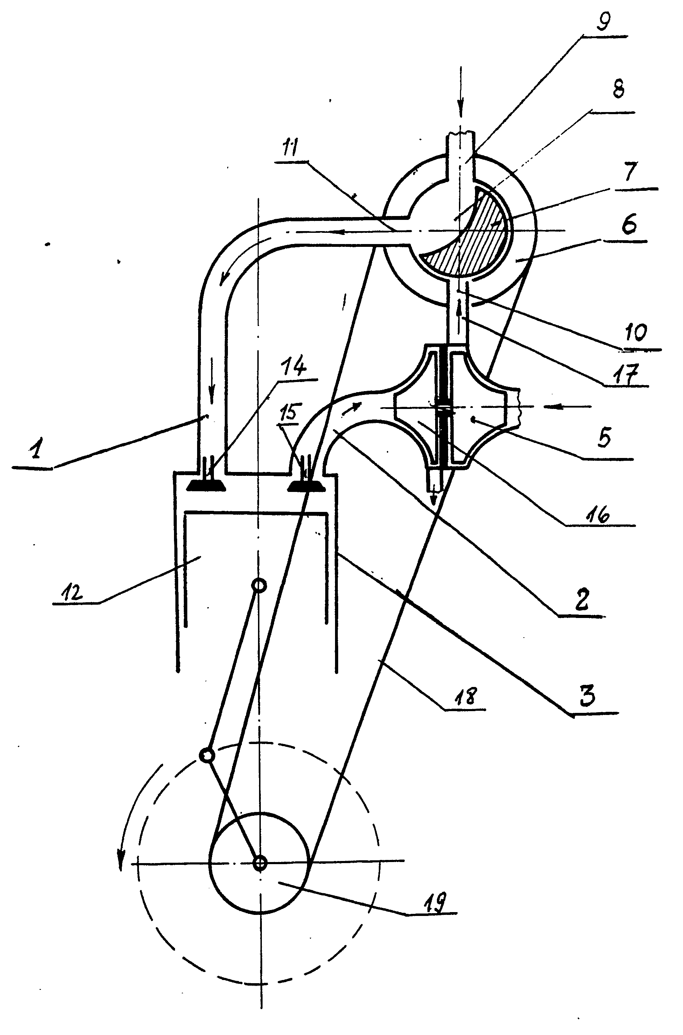

Die in der Zeichnung schematisch gezeigte Brennkraftmaschine ist als Zylinder 3 mit einem Kolben 12 und einer Kurbelwelle 19 dargestellt, die mit dem Kolben 12 in bekannter Weise verbunden ist. Kopfseitig hat der Zylinder 3 eine Einlaßleitung 1 mit einem Einlaßventil 14 und eine Auslaßleitung 2 mit einem Auslaßventil 15.

In der Auslaßleitung 2 ist eine Turbine 16 angeordnet, die zusammen mit einem Gebläse 5 einen abgasgetriebenen Turbolader bildet. Das Gebläse 5 führt über einen Förderstutzen 17 verdichtete Luft zu einer Verbindungsöffnung 10 in einem zylindrischen Gehäuse 6. Das Gehäuse 6 bildet einen Luftverteiler, in dem drehbar ein Rotor 7 mit einem Profilkanal 8 gelagert ist. Der Verbindungsöffnung 10 in dem Gehäuse 6 liegt diametral eine Beschickungsöffnung 9 für Luft oder ein Kraftstoff-Luft-Gemisch gegenüber. Symmetrisch zwischen der Verbindungsöffnung 10 und der Beschickungsöffnung 9, also jeweils in einem Winkelabstand von 90 Grad, ist im Gehäuse 6 eine Ladeöffnung 11 vorgesehen, über die das Einlaßrohr 1 angeschlossen ist. Der Rotor 7 ist über ein schematisch dargestelltes Getriebe 18 mit der Kurbelwelle 9 für einen taktgesteuerten Drehantrieb verbunden.

Die erfindungsgemäße Vorrichtung arbeitet folgendermaßen:

Die über die Auslaßleitung 2 aus dem Zylinder 3 abgeführten Verbrennungsgase treiben die Turbine 16 des Abgasturboladers, dessen Gebläse 5 Luft verdichtet und über einen Förderstutzen 17 an der Verbindungsöffnung 10 des zylindrischen Gehäuses 6 bereitstellt. Über das Getriebe 18 wird der Rotor 7 synchron zur Kurbelwelle 19 bei dem Viertaktmotor mit einem Übersetzungsverhältnis von 1:2 und bei einem Zweitaktmotor mit einem Übersetzungsverhältnis von 1:1 angetrieben. Wenn der Kolben 12 seine obere Totpunktstellung einnimmt, verschließt der Rotor 7 die Verbindungsöffnung 10 zum Gebläse 5. Sein Profilkanal 8 stellt jedoch eine Verbindung der Beschickungsöffnung 9 mit der Ladeöffnung 11 her, wodurch Luft oder ein Kraftstoff-Luft-Gemisch über die Einlaßleitung 1 bei offenem Einlaßventil 14 in den Zylinderraum oberhalb des Kolbens 12 gelangt. Bei der Bewegung des Kolbens 12 zu seinem unteren Totpunkt hin, verschließt der Rotor 7 die Beschickungsöffnung 9, während sein Profilkanal 8 für eine Verbindung der Verbindungsöffnung 10 mit der Ladeöffnung 11 sorgt, wodurch der Zylinder 3 mit Druckluft nachgeladen wird. Bei der Bewegung des Kolbens 12 von seinem unteren Totpunkt zum oberen Totpunkt verschließt der Rotor 7 die Ladeöffnung 11, wobei die Beschickungsöffnung 9, die Verbindungsöffnung 10 und die Ladeöffnung 11 bis zum Ende des entsprechenden Arbeitszyklus der Brennkraftmaschine voneinander isoliert bleiben. Dann wiederholt sich der Ablauf.

## Ansprüche

1. Vorrichtung für die Luftzuführung zu einer Brennkraftmaschine mit wenigstens einem Zylinder (3), in dem ein mit einer Kurbelwelle (19) gekoppelter Kolben (12) hin- und herbewegbar angeordnet ist und in den kopfseitig eine Einlaßleitung (1) mit einem Einlaßventil (14) und eine Auslaßleitung (2) mit einem Auslaßventil (15) münden, und mit einem Luft fördernden Gebläse (5), dessen Förderstutzen (17) über eine Verbindungsöffnung (10) mit einem einen Luftverteiler bildenden zylindrischen Gehäuse (6) verbunden ist, in welchem ein einen Profilkanal (8) aufweisender und über ein Getriebe (18) mit der Kurbelwelle (19) der Brennkraftmaschine verbundener Rotor (7) drehbar gelagert ist, dadurch gekennzeichnet, daß im Gehäuse (6) eine der Verbindungsöffnung (10) diametral gegenüberliegende Beschickungsöffnung (9) für Luft oder ein Kraftstoff-Luft-Gemisch und symmetrisch dazwischen eine Ladeöffnung (11) ausgebildet sind, an die die einlaßleitung (1) angeschlossen ist, wobei der Rotorantrieb so eingestellt ist, daß der Profilkanal (8) beim Ladetakt die Einlaßleitung (1) zunächst mit der Beschickungsöffnung (9) und dann mit der Verbindungsöffnung (10) verbindet.

2. Vorrichtung nach Anspruch 1, dadurch gekennzeichnet, daß der Profilkanal (8) sich am Rotor (7) über einen Umfangswinkel von weniger als 160 Grad erstreckt.

3. Vorrichtung nach Anspruch 1 oder 2, dadurch gekennzeichnet, daß das luftfördernde Gebläse (5) zusammen mit einer abgasgetriebenen Turbine (16) einen Abgasturbolader bildet.

**Europäisches Patentamt**

# EUROPÄISCHER RECHERCHENBERICHT

Nummer der Anmeldung

EP 88 11 9805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 9, Nr. 303 (M-434)[2026], 30. November 1985; & JP-A-60 142 017 (MAZDA K.K.) 27-07-1985 * Zusammenfassung * --- | 1,2 | F 02 B 33/44 F 02 B 29/00 |
| A | PATENT ABSTRACTS OF JAPAN, Band 5, Nr. 153 (M-91)[830], 12. Oktober 1981; & JP-A-56 85 522 (TOYO KOGYO K.K.) 11-07-1981 * Zusammenfassung * --- | 1 | |
| A | PATENT ABSTRACTS OF JAPAN, Band 10, Nr. 83 (M-466)[2140], 2. April 1986; & JP-A-60 224 931 (MAZDA K.K.) 09-11-1985 * Zusammenfassung * ----- | 1 | |
| | | | **RECHERCHIERTE SACHGEBIETE (Int. Cl.4)** |
| | | | F 02 B F 02 D F 01 L |

Der vorliegende Recherchenbericht wurde für alle Patentansprüche erstellt

| Recherchenort | Abschlußdatum der Recherche | Prüfer |
|---|---|---|
| DEN HAAG | 18-05-1989 | ERNST J.L. |